# EUROPÄISCHE PATENTSCHRIFT

(11) **EP 1 771 298 B1**
(45) Veröffentlichungstag und Bekanntmachung des Hinweises auf die Patenterteilung: **05.04.2017**
(21) Anmeldenummer: 05763088.1
(22) Anmeldetag: 21.07.2005
(51) Int. Cl.: B32B 3/20, B32B 27/32, B32B 27/34, F16L 11/04

(54) **KÜHLMITTELLEITUNG**
COOLANT LINE
CONDUITE D'AGENT REFRIGERANT

(30) Priorität: 26.07.2004 DE 102004036179
(43) Veröffentlichungstag der Anmeldung: 11.04.2007
(73) Patentinhaber: Evonik Degussa GmbH, 45128 Essen (DE)
(72) Erfinder: KUHMANN, Karl, 48249 Dülmen (DE); GÖRING, Rainer, 46325 Borken (DE); WURSCHE, Roland, 48249 Dülmen (DE); FRANOSCH, Jürgen, 45770 Marl (DE); RIES, Hans, 45772 Marl (DE); JACOBS, Clemens, 45721 Haltern am See (DE)
(86) Internationale Anmeldenummer: PCT/EP2005/053547
(87) Internationale Veröffentlichungsnummer: WO 2006/010736

(56) Entgegenhaltungen:
- EP-A- 0 436 923
- EP-A- 0 659 534
- EP-A- 0 659 535
- EP-A- 0 754 898
- EP-A- 1 216 823
- EP-A1- 1 362 890
- WO-A-02/44604
- WO-A-2004/033545
- DE-A1- 3 715 251
- DE-A1- 4 238 605
- DE-A1- 10 116 427
- DE-A1- 10 204 395
- DE-A1- 19 920 879
- DATABASE WPI Section Ch, Week 199837 Derwent Publications Ltd., London, GB; Class A23, AN 1998-434025 XP002342497 & JP 10 182874 A (UBE IND LTD) 7. Juli 1998 (1998-07-07)
- DATABASE WPI Section Ch, Week 199811 Derwent Publications Ltd., London, GB; Class A23, AN 1998-114878 XP002342498 & JP 10 001592 A (POLYPLASTICS KK) 6. Januar 1998 (1998-01-06)
- DATABASE WPI Section Ch, Week 200462 Derwent Publications Ltd., London, GB; Class A23, AN 1997-369667 XP002342499 & JP 03 568663 B2 (MITSUBISHI CHEM CORP) 22. September 2004 (2004-09-22)

## Beschreibung

Gegenstand der Erfindung ist eine mehrschichtige Kühlmittelleitung, die eine Außenschicht aus einer Polyamidformmasse und eine Innenschicht aus einer stabilisierten Polyolefinformmasse enthält.

Im Bereich der Kühlmittelleitung von Kraftfahrzeugen sind in den letzten Jahren steigende Anforderungen an die Langzeitbeständigkeit bei Wasser/Glykol-Innenkontakt sowie bei hohen Betriebstemperaturen des Leitungssystems zu verzeichnen. Die erforderlichen guten mechanischen Eigenschaften einschließlich der erforderlichen Berstdruckbeständigkeit bei erhöhten Temperaturen oberhalb von etwa 100 °C werden durch Polyamide erbracht. Reine Polyolefinleitungen zeigen in diesem erhöhten Temperaturbereich eine ungenügende Berstdruckfestigkeit; die Beständigkeit gegen Fette und Öle ist ebenfalls eingeschränkt.

Allerdings weisen Monoleitungen aus Polyamiden keine ausreichende Hydrolysebeständigkeit auf; durch das Quellungsverhalten in Kühlflüssigkeit wird die mechanische Festigkeit ebenfalls reduziert.

Aus diesem Grund sind im Stand der Technik mehrschichtige Kühlmittelleitungen bekannt, die eine polyolefinische Innenschicht und eine Polyamidaußenschicht besitzen. Die Innenschicht wirkt als Wassersperre und schützt die Polyamidaußenschicht vor hydrolytischem Abbau.

Insbesondere die aufgrund der steigenden Leistungsdichte zunehmenden Motor- bzw. Motorraumtemperaturen erfordern Rohrleitungen, die unter anderem folgende Eigenschaften aufweisen:
- Hohe Berstdruckfestigkeit bei Temperaturen im Bereich von 130 °C und darüber;
- ausreichende Kälteschlagzähigkeiten auch nach Wärmealterung, nachstellbar durch Wasser/Glykol-Umpumptests ab ca. 130 °C über mindestens 1000 Stunden bzw. Wärmelagerungen bei erhöhten Temperaturen, z. B. 150 °C;
- ausreichende Schichtenhaftung auch nach Langzeitbelastung;
- wirtschaftliche Herstellung mit bekannter Coextrusionstechnik.

Die EP-A-0 436 923 beschreibt teilgewellte mehrschichtige Kühlmittelleitungen aus einer polyolefinischen Innenschicht und einer Polyamidaußenschicht, die gegebenenfalls über eine Haftvermittlerschicht miteinander verbunden sind.

Die EP-A-1 362 890 beschreibt mehrschichtige druckbeaufschlagte Fluidleitungen mit mindestens einer weichen TPE-Innenschicht in Kombination mit einer äußeren Schicht auf Polyamidbasis.

Die EP-A-0 671 582 beschreibt eine Kühlflüssigkeitsleitung aus mehreren Schichten mit einer durch Stege in Längsrichtung modifizierten Wellgeometrie zur Reduzierung der Längenausdehnung.

Die DE-A-44 28 236 beschreibt ein dreischichtiges Wellrohr als Kühlwasserschlauch mit einer Innenschicht aus einem modifizierten thermoplastischen Elastomer.

Die WO 01/42005 beschreibt eine Kühlflüssigkeitsleitung mit einer inneren elastomeren Schicht und einer Polyamidaußenschicht.

Die WO 01/42701 beschreibt eine Kühlflüssigkeitsleitung mit einer Schicht aus einem Blend aus Polyamid und Polypropylen als Haftvermittler, einer TPE-Innenschicht sowie einer äußeren Polyamidschicht.

Die DE-A-37 15 251 beschreibt ein Zweischichtrohr mit dünner Polyolefin-Innenschicht.

Die genannten Schriften zeigen jedoch keinen Weg auf, wie die erhöhte Temperaturbeständigkeit, die Berstdruckbeständigkeit bei den genannten Betriebstemperaturen und die mechanische Langzeitbeständigkeit (insbesondere Schlagzähigkeit) erreicht werden können.

Der Schwachpunkt bei derartigen Rohren ist die polyolefinische Innenschicht. Es hat sich gezeigt, dass gerade Polypropylen unter den Betriebsbedingungen relativ rasch versprödet. Eine Ursache hierfür kann der im Kühlsystem gelöste Sauerstoff oder der von außen durch die Polymerschicht nach innen diffundierende Sauerstoff sein; vorhandene Metallspuren können in die gleiche Richtung wirken. Das Problem macht sich in gesteigertem Maße dann bemerkbar, wenn die polyolefinische Innenschicht auf Kosten der Polyamidaußenschicht dicker ausgeführt wird, um eine ausreichende Wasserbarriere zum Schutz der außenliegenden Polyamidschicht zu ermöglichen. Es hat sich gezeigt, dass hierfür eine Schichtdicke der Polyolefinschicht von mindestens ca. 0,3 mm, besser jedoch von mindestens 0,4 mm vorliegen sollte.

Eine Konsequenz der Versprödung der Innenschicht ist häufig die, dass sich Mikrorisse bilden, in denen Kühlflüssigkeit zur Polyamidaußenschicht gelangt. Die dann einsetzende Hydrolyse führt zu einem erheblichen Rückgang der Berstdruckfestigkeit und schließlich zu einem Versagen des Rohrs.

Es galt daher, diese Nachteile zu vermeiden und eine Kühlmittelleitung mit hoher Langzeitbeständigkeit zur Verfügung zu stellen.

Diese Aufgabe wurde durch eine Kühlmittelleitung gemäß Anspruch 1 gelöst. Diese enthält folgende Schichten:
I. Eine Außenschicht aus einer Polyamidformmasse und
II. eine Innenschicht, die Polypropylen sowie mindestens 0,02 Gew.-%, bevorzugt mindestens 0,1 Gew.-%, besonders bevorzugt mindestens 0,2 Gew.-%, insbesondere bevorzugt mindestens 0,3 Gew.-% und ganz besonders bevorzugt mindestens 0,4 Gew.-% eines Wärmestabilisators enthält.

In einer möglichen Ausführungsform ist das Material der Innenschicht haftungsmodifiziert, z. B. durch Einbau von Säureanhydridgruppen. Geeignete Verfahren sind Stand der Technik und entsprechende Produkte sind handelsüblich. Das Material der Innenschicht kann hierbei auch als Mischung eines unmodifizierten Polypropylentyps mit einem modifizierten Polypropylentyp vorliegen.

In einer zweiten möglichen Ausführungsform besteht die Innenschicht aus zwei Subschichten, deren eine, an die Polyamidschicht angrenzende, haftungsmodifiziert ist und deren andere nicht haftungsmodifiziert zu sein braucht. Abgesehen von der Haftungsmodifizierung können hier als Schichtenmaterialien unterschiedliche Polypropylenformmassen eingesetzt werden.

In einer weiteren möglichen Ausführungsform befindet sich zwischen den Schichten gemäß I. und II. eine Haftvermittlerschicht anderer Zusammensetzung. Hierzu sind aus dem Stand der Technik beispielsweise Polyamid/Polypropylen-Blends bekannt, bei denen zumindest ein Teil der Polypropylenkomponente haftungsmodifiziert ist.

Als Polyamide kommen in erster Linie aliphatische Homo- und Copolykondensate in Frage, beispielsweise PA 46, PA 66, PA 68, PA 610, PA 612, PA 410, PA 810, PA 1010, PA 412, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α, ω-Aminocarbonsäure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976.)

Der Einsatz von PA612 ist hierbei bevorzugt, da dieses Polyamid einerseits bei hohen Einsatztemperaturen eine hohe Berstdruckfestigkeit besitzt, andererseits eine ausreichende Dimensionsstabilität in feuchter Atmosphäre.

Sofern Copolyamide verwendet werden, können diese z.B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder Ähnliches als Codiamin enthalten. Lactame wie Caprolactam oder Laurinlactam bzw. Aminocarbonsäuren wie ω-Aminoundecansäure können als Cokomponente ebenfalls eingebaut sein.
Die Herstellung dieser Polyamide ist bekannt (z.B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden.

Die Polyamidformmasse kann entweder eines dieser Polyamide oder mehrere als Gemisch enthalten. Weiterhin können bis zu 50 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere, Polyolefine (EP-0 731 308 A), Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadien-oder Styrol/Butadien-Kautschuk mit Glastemperaturen Tg< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Das Polyamid weist bevorzugt einen Überschuss an Aminoendgruppen auf, der in der Regel davon herrührt, dass bei der Herstellung ein Diamin als Molekulargewichtsregler eingesetzt wurde. Der Überschuss an Aminoendgruppen kann auch durch Mischen eines aminogruppenarmen und eines aminogruppenreichen Polyamids eingestellt werden. Das Verhältnis von Aminoendgruppen zu Carboxylendgruppen sollte dann mindestens 51 : 49, bevorzugt mindestens 55 : 45, besonders bevorzugt mindestens 60 : 40 und insbesondere bevorzugt mindestens 70 : 30 betragen.

Daneben kann die Polyamid-Formmasse noch kleinere Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer speziellen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzol-sulfonsäure-n-butylamid oder Benzolsulfonsäure-2-ethylhexylamid infrage.

Die Polypropylenformmasse der Innenschicht enthält als Polypropylen ein Ethylen-Propylen-Blockcopolymer. Sie kann eine Schlagzähkomponente wie z. B. EPM- oder EPDM-Kautschuk oder SEBS enthalten. Darüber hinaus können die üblichen Hilfs- und Zusatzstoffe enthalten sein, beispielsweise Pigmente bzw. Füllstoffe wie Ruß, Titandioxid, Zinksulfat, Silikate oder Carbonate oder Verarbeitungshilfsmittel wie Wachse, Zinkstearat oder Calciumstearat. Übliche Anteile an Polypropylen in der Formmasse sind beispielsweise mindestens 50 Gew.-%, mindestens 60 Gew.-%, mindestens 70 Gew.-%, mindestens 80 Gew.-% oder mindestens 90 Gew.-%.

In einer bevorzugten Ausführungsform besitzt das verwendete Polypropylen der innersten Schicht eine Melt Flow Rate (MFR) gemäß ISO 1133 (230 °C/2,16 kg) im Bereich von 0,1 bis 3 g/10 min, besonders bevorzugt im Bereich von 0,15 bis 2 g/10 min, insbesondere bevorzugt im Bereich von 0,18 bis 1,5 g/10 min und ganz besonders bevorzugt im Bereich von 0,2 bis 1 g/10 min. Ein derartiges Rohr besitzt eine besonders hohe Alterungsbeständigkeit.

Das Polypropylen der innersten Schicht ist ein sogenanntes Propen-Ethen-Blockcopolymer, häufig auch als Heterophasen-Copolymer bezeichnet. Derartige Heterophasen-Copolymere können beispielsweise in einem zweiphasigen Prozess hergestellt werden, der in etwa wie folgt abläuft: Zuerst wird, z. B. mit einem Ziegler-Natta-Katalysator, ein hoch isotaktisches Polypropylen hergestellt, wobei unter Umständen eine kleine Menge Ethen anwesend sein kann, was ein Random-Polymerisat ergibt. Dieses Material fungiert als Matrix eines Heterophasen-Copolymers. In einem zweiten Reaktionsschritt (gegebenenfalls in einem anderen Reaktor) wird gegebenenfalls ein zweiter Katalysator eingebracht, z. B. ein Metallocenkatalysator. Nun erfolgt eine Copolymerisation von Ethen mit Propen, wobei sich diese Polymerisation in Hohlräumen des ersten Polymerisats abspielt. Dadurch wird das zweite Polymerisat dort eingelagert.

Das Blockcopolymer bzw. Heterophasen-Copolymer enthält in einer bevorzugten Ausführungsform mindestens 0,5 Gew.-%, mindestens 0,6 Gew.-%, mindestens 0,7 Gew.-%, mindestens 0,8 Gew.-% oder mindestens 0,9 Gew.-% sowie maximal 20 Gew.-%, maximal 15 Gew.-%, maximal 12 Gew.-%, maximal 10 Gew.-% oder maximal 8 Gew.-% an Ethen einpolymerisiert. Darüber hinaus können bis zu 15 Gew.-% 1-Buten einpolymerisiert sein.

In einer bevorzugten Ausführungsform enthält die Formmasse der Innenschicht oder einer der Innen-Subschichten 0,1 bis 50 Gew.-%, bevorzugt 0,5 bis 40 Gew.-% und besonders bevorzugt 1 bis 30 Gew.-% eines nanoskaligen Füllstoffs. Dies sind beispielsweise modifizierte Schichtsilikate. Ihr Aspektenverhältnis (der Quotient aus lateralen Dimensionen und Schichtdicke) beträgt in der Regel mindestens 20, bevorzugt mindestens 30 und besonders bevorzugt mindestens 50, wobei die Schichtdicke 0,5 bis 50 nm, bevorzugt 1 bis 35 nm und besonders bevorzugt 1 bis 20 nm beträgt. Polymere Nanocomposites aus organophilierten Schichtsilikaten und Polymeren wurden erstmals in der US-PS 2 531 396 beschrieben. Die Organophilierung von Schichtsilikaten ist beispielsweise auch aus den US-PSS 2 531 472, 2 996 506, 4 105 578, 4 412 018, 4 434 075, 4 434 076, 4 450 095 und 4 874 728 bekannt. Eine Übersicht zum Thema Schichtsilikate findet man im Lehrbuch der Anorganischen Chemie, Arnold F. Holleman, Niels Wiberg, 91.-100. Auflage, Verlag Walter de Gruyter, Berlin-New York, 1985, Seiten 764 bis 786.

Organische modifizierte Schichtsilikate werden von diversen Firmen angeboten, beispielsweise von Südchemie AG (Markenname: Nanofil), Southern Clay Products (Markename: Cloisite), Rheox GmbH (Markenname: Bentone), Laporte (Markenname: Laponite), COOP Chemical (Markenname: Somasif) und TOP (Markenname: Planomer).

Besonders geeignete nanoskalige Füllstoffe sind die Schichtsilikate Montmorillonit, Hectorit, Saponit sowie synthetische Schichtsilikate.

Der Wärmestabilisator ist beispielsweise ein sterisch gehindertes Phenol oder eine Schwefelverbindung, wie z. B. ein Dialkylester der Thiopropionsäure oder ein Thiodiethylendiester. Derartige Verbindungen sind handelsüblich; selbstverständlich können auch Mischungen verschiedener Wärmestabilisatoren eingesetzt werden.

Darüber hinaus kann die Polypropylenformmasse der Innenschicht oder einer der Innen-Subschichten, vorzugsweise die innerste hiervon, einen Metalldesaktivator enthalten, beispielsweise in Mindestmengen von 0,01 Gew.-%, 0,03 Gew.-%, 0,06 Gew.-% 0,1 Gew.-% oder 0,15 Gew.-%, wobei jeder für Polyolefine übliche Metalldesaktivator verwendet werden kann; z. B. kommen Hydrazide in Frage.

Vorteilhaft ist beispielsweise die Kombination aus Metalldesaktivator, gehindertem Phenol und Thiosynergist.

Die Polypropylen-Innenschicht gemäß II. besitzt eine Dicke von mindestens 0,4 mm. Die Gesamtwandstärke des Rohres liegt hierbei vorzugsweise im Bereich von 0,8 bis 2,5 mm, besonders bevorzugt im Bereich von 0,9 bis 2 mm und insbesondere bevorzugt im Bereich von 1 bis 1,5 mm; der Außendurchmesser des Rohres liegt vorzugsweise im Bereich von 8 bis 50 mm, besonders bevorzugt im Bereich von 10 bis 40 mm und insbesondere bevorzugt im Bereich von 12 bis 30 mm.

Die erfindungsgemäße Kühlmittelleitung kann in gerader oder in gewellter Form ausgeführt sein oder ist nur in Teilabschnitten gewellt. Sie lässt sich in einer oder mehreren Stufen durch Spritzgießen, Coextrusion, sequentielle Coextrusion, Coextrusionsblasformen oder Ummantelungsverfahren herstellen. Weiterhin ist es möglich, die Leitung mit Hilfe des sogenannten Conex-Verfahrens herzustellen. Es handelt sich hierbei um eine Coextrusion, wobei die einzelnen Schichten mittels eines speziellen Extruders (konische Rotoren und Statoren) aufeinander aufgetragen werden (WO 97/28949).

Die erfindungsgemäße Kühlmittelleitung kann darüber hinaus auch mittels Spritzgießsonderverfahren zur Herstellung mehrschichtiger Hohlkörper hergestellt werden. Hier ist beispielhaft die Kombination aus Sandwichspritzgießen (Herstellung eines mehrschichtigen Spritzgießformteils mit Haut/Kern-Aufbau) und anschließender Fluidinjektion (Gas- oder Wasserinjektion) zur Herstellung des Hohlkanals für die Flüssigkeitsführung in diesem Spritzgießteil zu nennen.

Abgewandelte Verfahren können prinzipiell auch auf der Halbschalentechnik beruhen, etwa der Verarbeitung mehrschichtiger Folien- /Plattenhalbzeuge durch Thermoformen und Verschweißen der Hälften zu einem Formteil mit Hohlräumen zur Flüssigkeitsführung.

In einer bevorzugten Ausführungsform besitzt das Wellrohr eine glatte Innenschicht. Die Außenschicht ist hierbei gewellt (gegebenenfalls zusammen mit einer Haftvermittlerschicht) und in den Wellentälern mit der Innenschicht haftend verbunden. Dies hat den Vorteil, dass der Strömungswiderstand niedrig ist, die Wanddicke gleichmäßig ist und insbesondere im Vergleich zu konventionellen Wellrohren keine lokalen übermäßigen Verstreckungen vorliegen; zudem vermeidet man hierdurch Sicken, in denen sich Ablagerungen bilden können. Derartige Rohre sind in der WO 03/064910 und der WO 03/064911 beschrieben.

Die erfindungsgemäße Kühlmittelleitung besteht je nach Art des Polyamidaußenschichtmaterials kurzzeitig Spitzenbelastungen bis 150 °C, wie sie in Motornähe vorkommen, sie besitzt eine hohe Wärmealterungsbeständigkeit und gute Berstdruckfestigkeit. Aufgrund der inneren anspruchsgemäßen Polyolefinschicht ist die Leitung auch bei hohen Temperaturen bis ca. 135 °C beständig gegen die als Kühlflüssigkeit benutzten Ethylenglykol-Wasser-Gemische.

Die Erfindung wird im Folgenden beispielhaft erläutert.

In den Beispielen wurden folgende Formmassen verwendet:

### Außenschicht (Schicht I):

Polyamid 1: ein wärmestabilisiertes PA12
Polyamid 2: ein wärmestabilisiertes PA612

### Innenschicht (Schicht II):

- Polypropylen 1:: Ein Heterophasen-Copolymer auf Basis von Propen mit einem Ethengehalt von 4,1 Gew.-% (bestimmt über ¹³C-NMR) und einem MFR 230/2,16 gemäß ISO 1133 von 2 cm³/10 min.
- Polypropylen 2:: Ein Heterophasen-Copolymer auf Basis von Propen mit einem Ethengehalt von 2,4 Gew.-% (bestimmt über ¹³C-NMR) und einem MFR 230/2,16 gemäß ISO 1133 von 0,4 cm³/10 min.
- Polypropylen 3:: Ein Compound aus 99,2 Gew.-% Polypropylen 2 und folgenden Verbindungen:
0,2 Gew.-% IRGANOX^{®} MD 1024, ein phenolbasierter Metalldesaktivator, 0,2 Gew.-% IRGANOX^{®} 1010, ein Wärmestabilisator auf Basis eines gehinderten Phenols sowie
0,4 Gew.-% IRGANOX^{®} PS802FL, ein schwefelbasierter Wärmestabilisator.
- Haftvermittler:: ADMER^{®} QB520E, ein mit Maleinsäureanhydrid funktionalisiertes Poly-propylen.

### Beispiele 1 bis 5:

Auf einer 5-Schichtanlage, die mit zwei 45-er Extrudern und drei 30-er Extrudern ausgerüstet war, wurden Rohre mit den Maßen 8 x 1 mm bei einer Extrusionsgeschwindigkeit von ca. 12 m/min hergestellt.

| Beispiel | Aussenschicht = Schicht I | Haftvermittler | Schicht II a | Schicht II b | Schicht II c |
|---|---|---|---|---|---|
| 1 | 0,45 mm Polyamid 1 | 0,1 mm | 0,15 mm Polypropylen 3 | 0,15 mm Polypropylen 3 | 0,15 mm Polypropylen 3 |
| 2 | 0,45 mm Polyamid 2 | 0,1 mm | 0,15 mm Polypropylen 3 | 0,15 mm Polypropylen 3 | 0,15 mm Polypropylen 3 |
| 3 *) | 0,45 mm Polyamid 1 | 0,1 mm | 0,15 mm Polypropylen 1 | 0,15 mm Polypropylen 1 | 0,15 mm Polypropylen 1 |
| 4 *) | 0,45 mm Polyamid 1 | 0,1 mm | 0,15 mm Polypropylen 2 | 0,15 mm Polypropylen 2 | 0,15 mm Polypropylen 2 |
| 5 | 0,70 mm Polyamid 1 | 0,1 mm | 0,05 mm Polypropylen 3 | 0,05 mm Polypropylen 3 | 0,10 mm Polypropylen 3 |

| | | | | | |
|---|---|---|---|---|---|
| *) Nicht erfindungsgemäß | | | | | |

Aufgrund der hohen Viskosität des Polypropylens wurde die Innenschicht in diesem Fall mit 3 Extrudern gefahren.

### Charakterisierung der Rohre:

Bei den Rohren der Beispiele 1 bis 5 war die Haftung zwischen der Haftvermittler- bzw. Polypropylen-Innenschicht und der Polyamidschicht sowohl extrusionsfrisch als auch nach Lagerung (Innenkontaktlagerung mit Glykol/Wasser bei 130 °C, 1300 h) so hoch, dass der Verbund teilweise nicht getrennt werden konnte, jedoch immer hohe Werte oberhalb 3 N/mm resultierten.

Bei Verwendung eines nicht erfindungsgemäßen Innenschicht-Polypropylens (Beispiele 3 und 4) war die Schlagzähigkeit nach der Innenkontaktlagerung schlechter als bei den erfindungsgemäßen Beispielen 1 und 2.

Beim Beispiel 5, das wegen der dünneren Innenschicht nicht direkt mit den übrigen Beispielen vergleichbar ist, war die Schlagzähigkeit nach der Innenkontaktlagerung gegenüber den erfindungsgemäßen Beispielen 1 und 2 verschlechtert.

## Patentansprüche

1. Kühlmittelleitung, die folgende Schichten enthält:
I. Eine Außenschicht aus einer Polyamidformmasse und
II. eine Innenschicht, die aus einer Polypropylenformmasse besteht, die mindestens 50 Gew.-% Polypropylen sowie mindestens 0,02 Gew.-% eines Wärmestabilisators enthält, wobei das Polypropylen ein Heterophasen-Copolymer von Propen und Ethen ist und die Innenschicht mindestens 0,4 mm dick ist.

2. Kühlmittelleitung gemäß Anspruch 1,
**dadurch gekennzeichnet,**
**dass** die Schichten gemäß I. und II. durch eine Haftvermittlerschicht miteinander verbunden sind.

3. Kühlmittelleitung gemäß Anspruch 1,
**dadurch gekennzeichnet,**
**dass** das Material der Innenschicht haftungsmodifiziert ist.

4. Kühlmittelleitung gemäß Anspruch 1,
**dadurch gekennzeichnet,**
**dass** die Innenschicht aus zwei Subschichten besteht, deren eine, an die Polyamidschicht angrenzende, haftungsmodifiziert ist.

5. Kühlmittelleitung gemäß einem der vorhergehenden Ansprüche,
**dadurch gekennzeichnet,**
**dass** der Wärmestabilisator ein sterisch gehindertes Phenol oder eine Schwefelverbindung ist.

6. Kühlmittelleitung gemäß einem der vorhergehenden Ansprüche,
**dadurch gekennzeichnet,**
**dass** die Formmasse der Innenschicht oder einer der Innen-Subschichten 0,1 bis 50 Gew.-% eines nanoskaligen Füllstoffs enthält.

7. Kühlmittelleitung gemäß einem der vorhergehenden Ansprüche,
**dadurch gekennzeichnet,**
**dass** die Formmasse der Innenschicht oder einer der Innen-Subschichten einen Metalldesaktivator enthält.

8. Kühlmittelleitung gemäß einem der vorhergehenden Ansprüche,
**dadurch gekennzeichnet,**
**dass** das Polypropylen der Schicht gemäß II. eine Melt Flow Rate (MFR) gemäß ISO 1133 (230 °C/2,16 kg) im Bereich von 0,1 bis 3 g/10 min besitzt.

9. Kühlmittelleitung gemäß einem der vorhergehenden Ansprüche,
**dadurch gekennzeichnet,**
**dass** das Heterophasen-Copolymer mindestens 0,5 Gew.-% und maximal 20 Gew.-% an Ethen einpolymerisiert enthält.

10. Kühlmittelleitung gemäß einem der vorhergehenden Ansprüche,
**dadurch gekennzeichnet,**
**dass** sie in Teilabschnitten oder vollständig gewellt ist.

11. Kühlmittelleitung gemäß Anspruch 10,
**dadurch gekennzeichnet,**
**dass** sie als Wellrohr mit glatter Innenschicht ausgebildet ist.

## Claims

1. Coolant line which comprises the following layers:
I. an outer layer comprising a polyamide molding composition and
II. an inner layer composed of a polypropylene molding composition which comprises at least 50% by weight of polypropylene and at least 0.02% by weight of a heat stabilizer, wherein the polypropylene is a heterophase copolymer of propene and ethene and the inner layer is at least 0.4 mm thick.

2. Coolant line according to Claim 1, **characterized in that** the layers I. and II. are joined to one another via a bonding layer.

3. Coolant line according to Claim 1, **characterized in that** the material of the inner layer is adhesion-modified.

4. Coolant line according to Claim 1, **characterized in that** the inner layer is composed of two sublayers of which the one adjacent to the polyamide layer is adhesion-modified.

5. Coolant line according to any of the preceding claims, **characterized in that** the heat stabilizer is a sterically hindered phenol or a sulfur compound.

6. Coolant line according to any of the preceding claims, **characterized in that** the molding composition of the inner layer or one of the inner sublayers contains from 0.1 to 50% by weight of a nanosize filler.

7. Coolant line according to any of the preceding claims, **characterized in that** the molding composition of the inner layer or one of the inner sublayers comprises a metal deactivator.

8. Coolant line according to any of the preceding claims, **characterized in that** the polypropylene of the layer II. has a melt flow rate (MFR) in accordance with ISO 1133 (230°C/2.16 kg) in the range from 0.1 to 3 g/10 min.

9. Coolant line according to any of the preceding claims, **characterized in that** the heterophase copolymer contains at least 0.5% by weight and not more than 20% by weight of ethene in copolymerized form.

10. Coolant line according to any of the preceding claims, **characterized in that** it is corrugated in subsections or in its entirety.

11. Coolant line according to Claim 10, **characterized in that** it is configured as a corrugated pipe having a smooth inner layer.

## Revendications

1. Conduite de réfrigérant, contenant les couches suivantes :
I. une couche externe constituée d'une masse de polyamide, et
II. une couche interne constituée d'une masse de polypropylène,
qui contient au moins 50 % en poids de polypropylène ainsi qu'au moins 0,02 % en poids d'un stabilisateur thermique, le polypropylène étant un copolymère à plusieurs phases de propène et d'éthène, et la couche interne ayant au moins 0,4 mm d'épaisseur.

2. Conduite de réfrigérant selon la revendication 1, **caractérisée en ce que** les couches selon I et II sont liées l'une à l'autre par une couche intermédiaire d'adhérence.

3. Conduite de réfrigérant selon la revendication 1, **caractérisée en ce que** le matériau de la couche interne est modifié en termes d'adhérence.

4. Conduite de réfrigérant selon la revendication 1, **caractérisée en ce que** la couche interne se compose de deux sous-couches dont une, voisine de la couche de polyamide, est modifiée en termes d'adhérence.

5. Conduite de réfrigérant selon une des revendications précédentes, **caractérisée en ce que** le stabilisateur thermique est un phénol avec encombrement stérique ou un composé du soufre.

6. Conduite de réfrigérant selon une des revendications précédentes, **caractérisée en ce que** la masse à mouler de la couche interne ou d'une des sous-couches internes contient de 0,1 à 50 % en poids d'une charge nanométrique.

7. Conduite de réfrigérant selon une des revendications précédentes, **caractérisée en ce que** la masse à mouler de la couche interne ou d'une des sous-couches internes contient un désactivateur de métaux.

8. Conduite de réfrigérant selon une des revendications précédentes, **caractérisée en ce que** le polypropylène de la couche selon II possède un indice de fluidité (MFR) selon la norme ISO 1133 (230°C/2,16 kg) entre 0,1 et 3 g/10 min.

9. Conduite de réfrigérant selon une des revendications précédentes, **caractérisée en ce que** le copolymère à plusieurs phases contient au moins 0,5 % en poids et au maximum 20 % en poids d'éthène polymérisé.

10. Conduite de réfrigérant selon une des revendications précédentes, **caractérisée en ce qu'**elle est ondulée par portions ou en totalité.

11. Conduite de réfrigérant selon la revendication 10, **caractérisée en ce qu'**elle est constituée d'un tube ondulé avec une couche interne lisse.
